# EUROPÄISCHE PATENTSCHRIFT

(11) **EP 3 086 575 B1**
(45) Veröffentlichungstag und Bekanntmachung des Hinweises auf die Patenterteilung: **18.07.2018**
(21) Anmeldenummer: 16166203.6
(22) Anmeldetag: 20.04.2016
(51) Int. Cl.: H04R 25/00, G06F 5/12, H04J 3/06, H04L 7/00, H04L 25/02

(54) **VERFAHREN ZUR SYNCHRONISIERUNG DER WIEDERGABE EINES VON EINEM SENDER AN EINE MEHRZAHL AN MOBILEN AUDIO-ENDGERÄTEN VERSENDETEN DIGITALEN SIGNALS**
METHOD OF SYNCHRONIZING THE REPRODUCTION OF A DIGITAL SIGNAL SENT FROM A TRANSMITTER TO A PLURALITY OF MOBILE AUDIO END DEVICES
PROCEDE DE SYNCHRONISATION DE LA RETRANSMISSION D'UN SIGNAL NUMERIQUE ENVOYE PAR UN EMETTEUR A UNE PLURALITE DE TERMINAUX AUDIO

(30) Priorität: 24.04.2015 DE 102015207608
(43) Veröffentlichungstag der Anmeldung: 26.10.2016
(73) Patentinhaber: Sivantos Pte. Ltd., Singapore 539775 (SG)
(72) Erfinder: ZHANG, Jie, 100095 Beijing (CN); LAMPE, Mattias, 38304 Wolfenbüttel (DE)
(74) Vertreter: FDST Patentanwälte

(56) Entgegenhaltungen:
- EP-A1- 2 355 387
- EP-A2- 1 715 723
- US-A1- 2013 170 654
- US-B1- 6 819 732

## Beschreibung

Die Erfindung betrifft ein Verfahren zur Synchronisierung der Wiedegabe eines von einem Sender an eine Mehrzahl an mobilen Audio-Endgeräten versendeten digitalen Signals, wobei die mobilen Audio-Endgeräte jeweils eine Signal-Empfangseinheit, einen mit der Signal-Empfangseinheit verbundenen First-In-First-Out-Speicher und eine mit dem First-In-First-Out-Speicher verbundene Audio-Wiedergabeeinheit aufweisen.

Für Hörgeräte wurden bisher digitale drahtlose Verbindungen vorrangig dazu verwendet, Betriebsparameter des Hörgerätes, wie beispielsweise die Lautstärke, von einem Handgerät aus einstellen zu können. In jüngster Zeit werden digitale drahtlose Übertragungsprotokolle auch dazu eingesetzt Audio-Daten von einer dafür eingerichteten Quelle, zum Beispiel einen Fernsehgerät oder einen Telefon, zum Hörgerät zu streamen. Hierbei weist die Quelle eine drahtbasierte Signalverbindung zu einem Sender auf, welcher ein digitales Funksignal aussendet, das von einem Hörgerät, welches mit einer entsprechenden Signal-Empfangseinheit ausgerüstet ist, empfangen werden kann.

Für einen besonderen Raumklang ist es hierbei vorteilhaft, für beide Ohren jeweils eigene Hörgeräte zu verwenden und das vom Sender versendete Signal entsprechend für einen Stereoempfang zu kodieren. Die Hörgeräte haben hierbei zwei Arbeitsmodi: Im regulären Modus nimmt jeweils ein Mikrofon beziehungsweise Mikrofonsystem eines Hörgerätes akustische Signale aus der Umgebung auf, welche im Hörgerät verstärkt werden, und entsprechend mittels eines Lautsprechers an das Gehör des Benutzers wiedergegeben werden. Im Streaming-Modus wird ein digitales Funksignal, in welchem Audio-Daten kodiert sind, empfangen, und die Audio-Daten durch den Lautsprecher wiedergegeben. Optional kann auch hierbei ein Handgerät zur Steuerung der Lautstärke oder zum Wechseln zwischen den Betriebsmodi etc. vorgesehen sein.

Die Wiedergabe der übertragenen Audio-Daten hat für das linke und rechte Gehör bevorzugt synchron abzulaufen. Ist die Wiedergabe nicht vollständig synchron, das heißt, besteht eine leichte Zeitverschiebung zwischen den Signalen für das linke und das rechte Ohr, wird dies vom Benutzer als eine Verschiebung der Richtung wahrgenommen, aus welcher der Klang kommt. Ein Klangsignal, welches bei einer Synchronwiedergabe als zentriert wahrgenommen wird, hat für den Benutzer des Hörgerätes-Systems bei fehlerhafter Synchronisierung seinen Ursprung rechts oder links vom Zentrum. Die beschriebene räumliche Asymmetrie in der Wahrnehmung kann bereits bei einer Zeitverschiebung in der Größenordnung von ca. zehn Audio-Samples auftreten.

In typischen Audio-Wiedergabeeinheiten tritt eine solche Zeitverschiebung üblicherweise nicht auf, da entweder, wie zum Beispiel bei aktiven Stereokopfhörern, von einer gemeinsamen Empfangseinheit empfangen wird, und mit einer gemeinsamen Zeitsynchronisierung auf die einzelnen Stereo-Wiedergabeeinheiten verteilt wird, oder die einzelnen Stereo-Wiedergabeeinheiten zur Synchronisierung ihrer jeweiligen Zeitskalen miteinander über Funk in Verbindung stehen, wie dies beispielsweise bei Heimkino-Systemen der Fall ist. In einem binauralen Hörgerät jedoch liegt üblicherweise keine drahtgebundene Verbindung zwischen den beiden Hörgeräten vor, und auch eine drahtlose Synchronisierung ihrer Zeitskalen ist aus Gründen der Batteriekapazität meist unerwünscht. Die zeitliche Taktung der Wiedergabe empfangener digitaler Audio-Daten erfolgt somit nur in Abhängigkeit vom jeweiligen internen Zeitgeber im Hörgerät.

In einem binauralen Hörgerätesystem können jedoch die beiden internen Zeitgeber der jeweiligen Hörgeräte minimale Unterschiede aufweisen. Werden beispielsweise für die Zeitgebung Quarzkristalle verwendet, können derartige Unterschiede durch Exemplarstreuung oder minimal unterschiedliche Abmessungen aufgrund von Fertigungstoleranzen resultieren. Die Unterschiede in der Zeitgebung sind hierbei üblicherweise im Bereich von 0,001 % bis 0,01 %. Da die Übertragung der Audio-Daten üblicherweise nicht in Echtzeit erfolgt, sondern die Daten vom Sender zu Datenpaketen mit deutlich höheren Datenraten zusammengefasst sind, als die Datenrate bei der Wiedergabe, werden in einem einzelnen Hörgerät die jeweils empfangenen Daten in einem Speicher zwischengespeichert, sodass die Synchronisierung der Wiedergabe allein an den internen Zeitgebern der jeweiligen Hörgeräte abhängt. Bei einer unterschiedlichen Zeit-Taktung von 0,001 % und einer Sample-Rate des Audio-Signals von 16 kHz, kann sich so nach einer Wiedergabe von einer Minute eine Verschiebung von 9,6 Samples anhäufen, was einer Zeitverschiebung von 0,6 ms zwischen den beiden oben entspricht und von einem Hörer bereits wahrgenommen werden kann.
Die US 2013/170654 A1 offenbart ein Verfahren zur Synchronisierung von an ein Hörgerät gestreamten Audio-Daten bzgl. eines gegebenen Bildsignals von einem Fernseher o.ä., damit z.B. in Sprachszenen das empfangene und wiedergegebene Audiosignal zu den Lippenbewegungen von Sprechern synchron erscheint. Hierfür wird eine fallweise eine Verzögerung des Audio-Signals vorgeschlagen, wobei die eigentliche Synchronisierung mit dem Bildsignal anhand eines Abgleichs des wiederzugebenden Streaming-Signals mit dem Audio-Outputs des Fernsehgerätes mittels eines Mikrofons des Hörgerätes erfolgt. Für binaurale Hörgeräte wird hierbei dieselbe Synchronisierung - Verzögerung und Abgleich mittels der Mikrofone in den Hörgeräten - vorgeschlagen.

Die EP 2 355 387 A1 offenbart an mobile Audio-Endgeräte paketweise übertragenen Audio-Daten, welche mit möglichst geringen Speicherressourcen über übliche Sample-Rate-Wandler wiedergegeben werden sollen. Hierfür werden die Datenpakete empfangen, welche eine gegebene Input-Sample-Rate aufweisen, und vor dem Eingeben in einen FIFO-Speicher anhand eines variablen Sample-Verhältnisses auf eine gewünschte Output-Sample-Rate konvertiert, wobei dieses Sample-Verhältnis in Abhängigkeit vom Füllstand des FIFO-Speichers "als Fein-Tuning" eingestellt wird, um den Füllstandes des FIFO-Speichers in einem Zielkorridor zu halten. Die abschließende Wiedergabe der im FIFO-Speicher abgelegten Daten mit der Output-Sample-Rate kann dann über übliche Konverter erfolgen.

Der Erfindung liegt daher die Aufgabe zugrunde ein Verfahren zur Synchronisierung der Wiedergabe eines digitalen Signals anzugeben, welches von einem Sender an eine Mehrzahl an mobilen Endgeräten versendet wird, wobei das Verfahren keinerlei Signalverbindung zwischen dem jeweiligen Audio-Endgeräten erfordern sollte.

Die genannte Aufgabe wird erfindungsgemäß gelöst durch ein Verfahren zur Synchronisierung der Wiedegabe eines von einem Sender an eine Mehrzahl an mobilen Audio-Endgeräten versendeten digitalen Signals, wobei die mobilen Audio-Endgeräte jeweils eine Signal-Empfangseinheit, einen mit der Signal-Empfangseinheit verbundenen First-In-First-Out-Speicher und eine mit dem First-In-First-Out-Speicher verbundene Audio-Wiedergabeeinheit aufweisen, und wobei der Sender das digitale Signal als eine Vielzahl an Datenpaketen mit einer im Zeitmittel konstanten Datenrate versendet. Hierbei ist vorgesehen, dass für jedes mobile Audio-Endgerät jeweils in gleicher Weise die Signal-Empfangseinheit wenigstens eine Untermenge der Vielzahl an Datenpaketen empfängt, die Signal-Empfangseinheit anhand der empfangenen Datenpakete ein Zeit-Referenzsignal generiert, vom First-In-First-Out-Speicher ein FIFO-Signal generiert wird, welches Informationen zum Füllstand des First-In-First-Out-Speichers zu bestimmten Zeitpunkten enthält, auf Basis des Zeit-Referenzsignals und des FIFO-Signals eine momentane Wiedergabegeschwindigkeit eingestellt wird, die Audio-Wiedergabeeinheit dem digitalen Signal entsprechende Samples mit der momentanen Wiedergabegeschwindigkeit wiedergibt, und hierdurch der Füllstand des First-In-First-Out-Speichers im Zeitmittel konstant gehalten wird. Vorteilhafte und teils für sich gesehen erfinderische Ausgestaltungen sind Gegenstand der Unteransprüche sowie der nachfolgenden Beschreibung.

Das digitale Signal ist hierbei insbesondere durch ein Funksignal mit digital kodierten Daten gegeben, beispielsweise in Form einer Trägerfrequenz, auf welcher die digitalen Daten durch Phasenmodulation kodiert sind. Die Datenpakete bilden jeweils zeitlich in sich abgeschlossene Einheiten. Die Datenrate des Senders ist insbesondere konstant in Zeitmittel, welches über eine Vielzahl an Datenpaketen erhoben wird. Entsprechend ist der Füllstand des First-In-First-Out-Speichers konstant in einem Zeitmittel, welches über eine Vielzahl an Datenpaketen oder über eine Mehrzahl an Zeit-Referenzsignal-Pulsen erhoben wird.

Die Erfindung macht sich dabei zunächst die Erkenntnis zu Nutze, dass durch die Datenpakete als zeitlich jeweils in sich abgeschlossene Einheiten unabhängig von der jeweils kodierten Information vom Sender beim Versenden ein zeitliches Muster an Intervallen, in welchem entweder Information versendet wird, oder in welchem keine Information versendet wird, vorgegeben wird. Dieses zeitliche Muster ist für jedes mobile Audio-Endgerät gleich, sodass es für die Synchronisierung der jeweiligen Audio-Endgeräte untereinander verwendet werden kann. Hierfür wird in jedem mobilen Audio-Endgerät auf die gleiche Weise anhand des zeitlichen Musters, welches durch die empfangenen Datenpakete gebildet wird, das Zeit-Referenzsignal generiert. Insbesondere ist hierfür keine Veränderung des Sendeprotokolls, welches der Sender zum Versenden der Datenpakete verwendet, erforderlich. Die Synchronisierung erfolgt somit allein auf der Ebene der mobilen Audio-Endgeräte. Für die Bildung des Zeit-Referenzsignals kann dabei gegebenenfalls der Umstand ausgenutzt werden, dass oftmals der Sender jeweils Gruppen von Datenpaketen zu zeitlichen Blöcken zusammenfasst, innerhalb derer jeweils die zeitliche Abfolge von Intervallen, während derer Datenpakete versendet werden, jeweils identisch sind. Hierdurch wird über die zeitliche Symmetrie der Blöcke untereinander ein zeitliches Muster vom Sender vorgegeben, welches von den mobilen Audio-Endgeräten leicht erkannt und verwendet werden kann.

Die Datenrate, also die Datenmenge pro Zeiteinheit, während des Versendens einzelner Datenpakete ist üblicherweise höher als die durch die Wiedergabegeschwindigkeit gegebene Wiedergaberate, also die Datenmenge pro Zeiteinheit im wiedergegebenen Signal. Dies bedeutet, dass jeweils in jedem mobilen Audio-Endgerät einzelne empfangene Datenpakete vorübergehend zwischenzuspeichern sind, und die jeweilige Audio-Wiedergabeeinheit die für die Wiedergabe vorhergesehenen Audio-Daten aus einem für das Zwischenspeichern vorgesehenen Speicher entnimmt. Die Wiedergabegeschwindigkeit hängt dabei in jedem mobilen Audio-Endgerät vom jeweiligen internen Zeitgeber ab. Während nun also anhand der empfangenen Datenpakete ein Zeit-Referenzsignal generiert wird, welches für alle mobilen Audio-Endgeräte eine einheitliche Synchronisierung ermöglicht, soll nun über die Zeit-Referenzsignale eine Synchronisierung der Wiedergabe derart erfolgen, dass die verschiedenen Taktungen der jeweiligen internen Zeitgeber der mobilen Audio-Endgeräte keinerlei Auswirkungen entfalten.

Hierfür erkennt die Erfindung, dass bei je zwei mobilen Audio-Endgeräten, deren interne Zeitgeber jeweils eine minimal unterschiedliche Taktung aufweisen, aufgrund der daraus resultierenden unterschiedlichen Wiedergabegeschwindigkeit bezüglich einer realen Referenzzeitgebung die Menge an für die Wiedergabe vorgesehenen, zwischengespeicherten Audio-Daten ebenso für beide mobilen Audio-Endgeräte unterschiedlich ist. Eine fest eingestellte Wiedergabegeschwindigkeit beziehungsweise Datenrate bei der Wiedergabe hängt in einem mobilen Audio-Endgerät von der internen Zeitgebung ab. Bei der Verwendung eines First-In-First-Out-Speichers (FIFO-Speichers) kann nun eine Veränderung der Menge an für die Wiedergabe vorgesehenen, zwischengespeicherten Daten als ein Indiz dafür gewertet werden, dass die interne Zeitgebung im mobilen Audio-Endgerät eine leichte Abweichung von der Zeitgebung des Senders aufweist. Da alle mobilen Audio-Endgeräte dieselben in den Datenpaketen kodierten Audio-Daten empfangen, bedeutet ein in Zeitmittel konstanter Füllstand des FIFO-Speichers, dass die jeweilige reale Wiedergabegeschwindigkeit eines mobilen Audio-Endgeräts unabhängig von dessen internem Zeitgeber mit der im Zeitmittel konstanten Datenrate des Senders synchronisiert ist.

Entsprechend ist also für alle mobilen Audio-Endgeräte der jeweilige Füllstand des FIFO-Speichers im Zeitmittel konstant zu halten, um diese miteinander zu synchronisieren. Hierfür wird nun für jedes mobile Audio-Endgerät jeweils in gleicher Weise zu Zeitpunkten, welche durch das jeweilige Zeit-Referenzsignal vorgegeben sind, eine Information zum Füllstand des FIFO-Speichers erhoben, sodass hierdurch Veränderungen im Füllstand des FIFO-Speichers zwischen den besagten Zeitpunkten bestimmt werden können.

Wird nun in einem mobilen Audio-Endgerät eine solche Veränderung im Füllstand des FIFO-Speichers festgestellt, weil im FIFO-Signal eine entsprechende Information vorliegt, so kann für die Audio-Wiedergabeeinheit die Wiedergabegeschwindigkeit entsprechend angepasst werden, sodass der FIFO-Speicher wieder den gewünschten Wert einnimmt.

Beispielsweise gibt das Zeit-Referenzsignal, welches ein mobiles Audio-Endgerät anhand der vom Sender versendeten Datenpakete generiert, einen Zeitpunkt vor, bei welchem der Füllstand des FIFO-Speichers ermittelt und als FIFO-Signal ausgegeben wird. Liegt dieser Füllstand beispielsweise über einem oberen Sollwert, bedeutet dies, dass die Signal-Empfangseinheit eine größere Menge an in den Datenpaketen kodierten Audio-Daten empfängt, als die Audio-Wiedergabeeinheit in Samples umsetzt und wiedergibt. Entsprechend wird auf Basis des internen Zeitgebers des mobilen Audio-Endgeräts die momentane Wiedergabegeschwindigkeit der Audio-Wiedergabeeinheit kurzzeitig erhöht, sodass kurzzeitig mehr Samples pro Zeiteinheit wiedergegeben werden. Die Erhöhung kann alternativ auch ohne eine bestimmte Zeitvorgabe erfolgen, und in diesem Fall bis zu einem erneuten Unterschreiten des oberen Sollwertes und eine entsprechende Angabe im FIFO-Signal andauern. Der Betrag der Erhöhung der momentanen Wiedergeschwindigkeit kann dabei insbesondere vom konkreten Wert des Füllstandes des FIFO-Speichers abhängig gemacht werden.

Die momentane Wiedergabegeschwindigkeit bleibt dann hierbei solange erhöht, bis bei einem weiteren Zeitpunkt, zu welchem der Füllstand des FIFO-Speichers erneut bestimmt wird, der Sollwert wieder erreicht ist. Hierdurch wird der Füllstand des FIFO-Speichers im Zeitmittel konstant gehalten. Dadurch, dass dies für alle mobilen Audio-Endgeräte in gleicher Weise geschieht, kann die Wiedergabe der jeweiligen mobilen Audio-Endgeräte synchronisiert werden. Die hierbei auftretenden minimalen Variationen der momentanen Wiedergabegeschwindigkeit hängen hierbei von der maximalen, zwischen zwei Signalpulsen des Zeit-Referenzsignals auftretenden Verschiebung ab, und liegen deshalb weit unterhalb der Wahrnehmungsschwelle eines Benutzers.

Bevorzugt fasst der Sender jeweils Gruppen von Datenpaketen zu zeitlichen Blöcken zusammen, wobei jeder Block ein Zeitmuster mit einer Sendezeit und einer Ruhezeit aufweist, wobei alle Datenpakete eines Blocks während der Sendezeit gesendet werden, und wobei die Ruhezeit jedes Blocks länger ist als der zeitliche Abstand je zweier Datenpakete zueinander. Der Abstand zweier benachbarter Datenpakete zueinander ist dabei insbesondere über die jeweiligen Start- und Endzeitpunkte zu definieren. Aufgrund der im Vergleich geringen räumlichen Distanz der Übertragung kann hierbei der Startzeitpunkt des Senders mit den Startzeitpunkten der jeweiligen Empfangseinheiten gleichgesetzt werden. Insbesondere können hierbei die Abstände zwischen Datenpaketen vom jeweiligen Übertragungs-Protokoll abhängen. Als Sendezeit ist hierbei die Zeit vom Startzeitpunkt des ersten Datenpaketes bis zum Endzeitpunkt des letzten Datenpaketes in einem Block zu verstehen, die Sendezeit umfasst also auch Intervalle zwischen einzelnen Datenpaketen eines Blocks, während derer keine Übertragung erfolgt. Anhand der durch die Blöcke und insbesondere durch die Sendezeiten und Ruhezeiten gegebenen Zeitmuster lassen sich die Zeit-Referenzsignale besonders einfach generieren.

Vorzugsweise generiert dabei jede Signal-Empfangseinheit das Zeit-Referenzsignal aus einer Periodizität der empfangenen Blöcke von Datenpaketen. Ein Signalspuls des Zeit-Referenzsignals kann hierbei jeweils zu einem oder zu mehreren bestimmten Zeitpunkten innerhalb eines Blockes, also bei festen Zeitabständen bzgl. des Startzeitpunktes des jeweiligen Blockes, generiert werden, wobei die Zeitpunkte über den internen Zeitgeber des mobilen Audio-Endgerätes bestimmt werden. Durch die Unterschiede der einzelnen Zeitgeber tritt hierbei eine leichte zeitliche Verschiebung zwischen den mobilen Audio-Endgeräten auf. Diese kann jedoch durch die maximale, zwischen zwei Signalpulsen des Zeit-Referenzsignals auftretende Verschiebung beschränkt werden, da bei jedem Signalpuls der interne Zeitgeber neu auf das Zeit-Referenzsignal abgestimmt werden kann. Durch eine günstige Wahl der Zeitpunkte für die Generierung des Zeit-Referenzsignals, welche insbesondere in Abhängigkeit des durch den Sender bestimmten Übertragungsprotokolls erfolgen kann, ist somit diese minimale Verschiebung vernachlässigbar.

Als weiter vorteilhaft erweist es sich, wenn für jedes mobile Audio-Endgerät jeweils zu anhand des Zeit-Referenzsignals bestimmten Zeitpunkten der Füllstand des FIFO-Speichers zumindest Für die zumindest näherungsweise Ermittlung der Füllstandes des FIFO-Speichers zu den anhand des Zeit-Referenzsignals bestimmten Zeitpunkten kann die im FIFO-Speicher gespeicherte Datenmenge als exakter Byte-Wert ermittelt und als FIFO-Signal ausgegeben werde. Je nach Architektur des FIFO-Speichers, so beispielsweise, wenn zu speichernde Informationen nicht zwingend in physikalisch zusammenhängenden Bereichen abgelegt werden, kann eine exakte Bestimmung des Füllstandes jedoch zu aufwändig sein. In diesem Fall wird zu den betreffenden Zeitpunkten jeweils ein Intervall von Byte-Werten ermittelt, in welchem der Füllstand aktuell einzuordnen ist, und entsprechend ein Index des ermittelten Intervalls als FIFO-Signal ausgegeben. Werden zu speichernde Informationen im FIFO-Speicher beispielsweise auf verschiedene physikalische Speicherblöcke verteilt, so kann ein entsprechendes Intervall über die Anzahl an Speicherblöcken, in welchen Informationen gespeichert sind, und die bekannte Größe der Speicherblöcke abgeschätzt werden.

Zweckmäßigerweise werden hierbei für jedes mobile Audio-Endgerät jeweils ein oberer Grenzwert und ein unterer Grenzwert für den Füllstand des FIFO-Speichers vorgegeben, wobei die momentane Wiedergabegeschwindigkeit für eine anhand des Zeit-Referenzsignals bestimmten Dauer erhöht wird, wenn der obere Grenzwert überschritten wird, und wobei die momentane Wiedergabegeschwindigkeit für eine anhand des Zeit-Referenzsignals bestimmten Dauer verringert wird, wenn der untere Grenzwert unterschritten wird. Insbesondere kann dies auch derart erfolgen, dass zu den bestimmten Zeitpunkten ermittelt wird, ob sich der Füllstand des FIFO-Speichers in einem Intervall an Byte-Werten befindet, deren Grenzen durch den oberen bzw. unteren Grenzwert gegeben sind.

Die Erhöhung bzw. Verringerung der momentanen Wiedergabegeschwindigkeit, beginnend mit einem durch einen Signalpuls des Zeit-Referenzsignals fest vorgegebenen ersten Zeitpunkt, kann hierbei insbesondere bis zu einem nachfolgenden Signalpuls des Zeit-Referenzsignals oder einen durch diesen Signalpuls fest vorgegebenen zweiten Zeitpunkt andauern. Beim nachfolgenden Signalpuls bzw. beim zweiten Zeitpunkt wird dann der Füllstand des FIFO-Speichers erneut überprüft, und falls der Füllstand wieder zwischen dem oberen und dem unteren Grenzwert liegt, die momentane Wiedergabegeschwindigkeit anhand des jeweiligen inneren Zeitgebers wieder auf einen durch das Übertragungs-Protokoll ursprünglich vorgesehenen Wert eingestellt.

In einer weiter vorteilhaften Ausgestaltung der Erfindung wird für jedes mobile Audio-Endgerät jeweils ein oberer Grenzwert und ein unterer Grenzwert für den Füllstand des First-In-First-Out-Speichers vorgegeben, wobei ein Überschreitungssignal generiert wird, wenn der obere Grenzwert überschritten wird, wobei ein Unterschreitungssignal generiert wird, wenn der untere Grenzwert unterschritten wird, und wobei aus dem Überschreitungssignal und dem Unterschreitungssignal das FIFO-Signal generiert wird. Diese Variante ist besonders vorteilhaft, wen sich der Füllstand des FIFO-Speichers exakt bestimmen lässt. In diesem Fall wird das FIFO-Signal nur dann generiert, wenn der Füllstand des FIFO-Speichers den vorgegebenen Wertebereich verlässt, was auf eine entsprechende Zeitverschiebung (Verzögerung oder Beschleunigung) der Wiedergabe durch den internen Zeitgeber hindeutet, und somit ressourceneffizient, weil bedarfsgemäß korrigiert werden kann. Hierfür wird der Zeitpunkt, zu welchem das Unterschreitungssignal bzw. das Überschreitungssignal generiert wird, bzgl. des Zeit-Referenzsignals mit bestimmt.

Günstigerweise wird dabei für jedes mobile Audio-Endgerät jeweils die momentane Wiedergabegeschwindigkeit für eine anhand des Zeit-Referenzsignals bestimmten Dauer erhöht, wenn das FIFO-Signal ein Überschreitungssignal enthält, und die momentane Wiedergabegeschwindigkeit für eine anhand des Zeit-Referenzsignals bestimmten Dauer verringert, wenn FIFO-Signal ein Unterschreitungssignal enthält. Nach der anhand des Zeit-Referenzsignals bestimmten Dauer wird die momentane Wiedergabegeschwindigkeit anhand des jeweiligen inneren Zeitgebers wieder auf einen durch das Streaming-Protokoll ursprünglich vorgesehenen Wert eingestellt. Sollte zu diesem Zeitpunkt der Füllstand des FIFO-Speichers sich nicht im vorgegebenen Wertebereich befinden, so wird erneut ein Überschreitungssignal bzw. ein Unterschreitungssignal generiert.

In einer weiter vorteilhaften Ausgestaltung der Erfindung wird für jedes mobile Audio-Endgerät jeweils die momentane Wiedergabegeschwindigkeit in Abhängigkeit des FIFO-Signals auf einen anhand des Zeit-Referenzsignals und/oder des Füllstandes des First-In-First-Out-Speichers bestimmten Betrag eingestellt. Dies lässt sich regelungstechnisch besonders einfach realisieren, da hierfür nur eine Regelschleife zu implementieren ist, welche eine über eine Stellgröße die momentane Wiedergabegeschwindigkeit in Abhängigkeit von einer Abweichung regelt, welche der Füllstand des FIFO-Speichers bzgl. eines Sollwertes oder eines Soll-Bereiches aufweist. Insbesondere kann hierfür die momentane Wiedergabegeschwindigkeit, ausgehend von der durch das Übertragungs-Protokoll vorgegebenen Wiedergabegeschwindigkeit, bei einer Abweichung, beispielsweise bei einem Überschreiten eines oberen Grenzwertes, auch für einen a priori unbestimmten Zeitraum "bis auf weiteres" um einen anhand des Füllstandes des FIFO-Speichers bestimmten Betrag erhöht werden, bis der Füllstand des FIFO-Speichers wieder in einem vorgegebenen Bereich liegt.

Die Erfindung nennt weiter ein Hörsystem mit einer Mehrzahl an mobilen Audio-Endgeräten, welche jeweils eine Signal-Empfangseinheit, einen First-In-First-Out-Speicher und eine Audio-Wiedergabeeinheit umfassen, wobei die mobilen Audio-Endgeräte dazu eingerichtet sind, das Verfahren nach einem der vorhergehenden Ansprüche durchzuführen. Die für das Verfahren zur Synchronisierung der Wiedegabe eines von einem Sender versendeten digitalen Signals und für die Weiterbildungen des Verfahrens genannten Vorteile können dabei sinngemäß auf das Hörsystem übertragen werden.

Vorteilhafterweise ist dabei das Hörsystem als ein binaurales Hörgerät mit zwei Hörhilfegeräten ausgebildet. Aufgrund der Batterie-bedingten Restriktionen hinsichtlich des Leistungsverbrauches ist ein binaurales Hörgerät, welches für eine entsprechende Synchronisierung der Wiedergabe ohne Notwendigkeit einer Funkverbindung zwischen den beiden Hörhilfegeräten des binauralen Hörgeräts eingerichtet ist, besonders vorteilhaft.

Nachfolgend wird ein Ausführungsbeispiel der Erfindung anhand einer Zeichnung näher erläutert. Hierbei zeigen jeweils schematisch:
- Fig. 1: einen Sender, welcher an ein binaurales Hörgerätesystem mit zwei Hörhilfegeräten ein digitales Signal zur Wiedergabe übermittelt,
- Fig. 2: anhand eines Zeitstrahls den zeitlichen Verlauf des digitalen Signals nach Fig. 1,
- Fig. 3: in einem Blockdiagram den Ablauf des Verfahrens zur Synchronisierung der Wiedergabe in einem der Hörhilfegeräte nach Fig. 1

Einander entsprechende Teile und Größen sind in allen Figuren jeweils mit gleichen Bezugszeichen versehen.

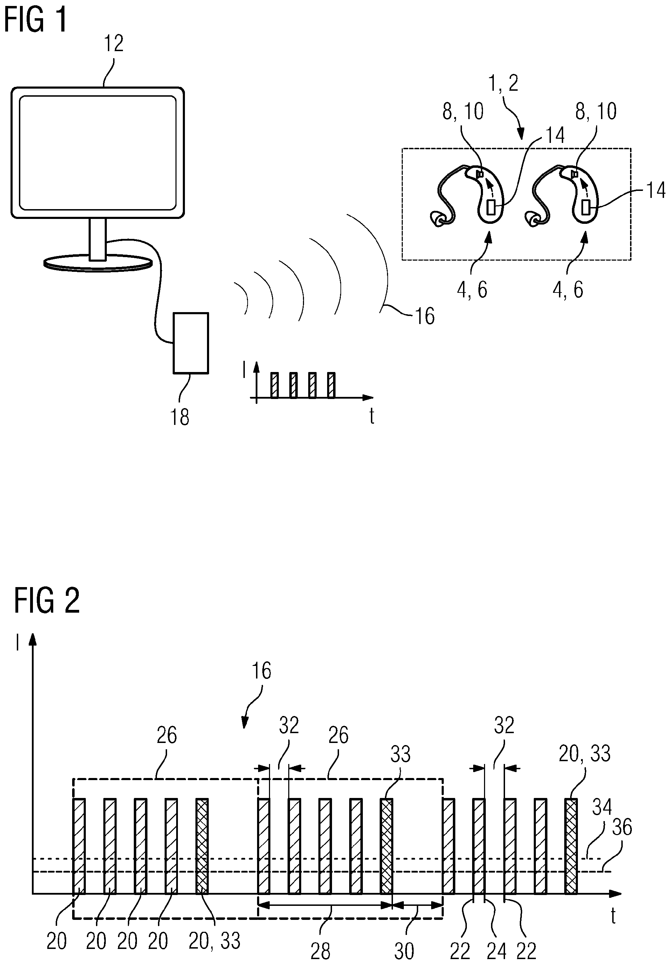

In Fig. 1 ist schematisch ein als ein binaurales Hörgerät 1 ausgebildetes Hörsystem 2 dargestellt. Das Hörsystem weist zwei mobile Audio-Endgeräte 4 auf, welche im vorliegenden Fall jeweils durch Hörhilfegeräte 6 gegeben sind. Jedes der beiden Hörhilfegeräte 6 des binauralen Hörgerätes ist dazu eingerichtet, mittels eines nicht näher dargestellten Mikrofons Schall aus der Umgebung aufzuzeichnen, zur Korrektur einer Hörschädigung eines Benutzers des binauralen Hörgerätes 1 zu verstärken, und über eine einen Lautsprecher 8 umfassende Audio-Wiedergabeeinheit 10 an ein Ohr des Benutzers wiederzugeben.

Um bei der Verwendung von Unterhaltungselektronik, wie sie beispielsweise durch ein Fernsehgerät 12 gegeben sein kann, dem Benutzer eine bessere Klanqualität zu ermöglichen, als durch die oben beschriebene akustische Aufnahme und Wiedergabe des von den Lautsprechern des Fernsehgeräts 12 erzeugten Schalls möglich wäre, ist jedes Hörhilfegerät 6 mit einer Signal-Empfangseinheit 14 ausgerüstet, welche dazu eingerichtet ist, ein digitales Signal 16 zu empfangen, welches von einem mit dem Fernsehgerät 12 verbundenen Sender 18 versendet wird. Im digitalen Signal 16 ist dabei die jeweils aktuelle Tonspur des Fernsehgeräts 12 kodiert. Die Hörhilfegeräte 6 können also über ihre jeweilige Signal-Empfangseinheit 14 die Tonspur digital empfangen, so dass Klangverluste beim akustischen Übertragungsweg von den Lautsprechern des Fernsehgerätes 12 über die Umgebung zum jeweiligen Mikrofon des Hörhilfegeräts 6 vermieden werden können.

Problematisch kann sich hierbei jedoch die Wiedergabe des digitalen Signals 16 durch die Lautsprecher 8 der Hörhilfegeräte 6 erweisen. Die Wiedergabegeschwindigkeit, welche idealerweise durch die Sample-Rate im Übertragungs-Protokoll des digitalen Signals gegeben ist, wird durch einen internen Zeitgeber im jeweiligen Hörhilfegerät 6 bestimmt. Aufgrund von fertigungsbedingten Unterschieden der beiden internen Zeitgeber der Hörhilfegeräte 6 könnte es jedoch nach einer längeren Wiedergabe einer im digitalen Signal 16 kodierten Tonspur zu einer leichten Zeitverschiebung zwischen den beiden Hörhilfegeräten 6 kommen, was in der Wahrnehmung des Benutzers zu einer räumlichen Verschiebung des wiedergegebenen Klangs führt. Um dies zu verhindern, sind die beiden Hörhilfegeräte 6 bei der Wiedergabe einer im digitalen Signal 16 kodierten Tonspur miteinander zu synchronisieren. Aus Gründen der Batteriekapazität wird die Synchronisierung hierbei ohne weitere Kommunikation zwischen den Hörhilfegeräten 6 durchgeführt, als zeitliche Referenz zur Synchronisierung wird nur das vom Sender 18 versendete digitale Signal 16 verwendet, welches für beide Hörhilfegeräte 6 identisch ist.

In Fig. 2 ist der zeitliche Verlauf des vom Sender 18 versendeten digitalen Signals 16 nach Fig. 1 dargestellt. Gegen eine Zeitachse t ist hierbei die momentane Datenmenge I in allen Übertragungskanälen aufgetragen. Im digitalen Signal 16 werden die Informationen in Datenpaketen 20 übertragen. Ein einzelnes Datenpaket 20 stellt hierbei eine zeitlich abgeschlossene Einheit dar. Vom Startzeitpunkt 22 an bis zum Endzeitpunkt 24 eines einzelnen Datenpaketes 20 wird hierfür in einem bestimmten Übertragungskanal, welcher beispielsweise durch eine Trägerfrequenz bestimmt sein kann, kontinuierlich das Signal entsprechend der zu übertragenden Bitwerte moduliert. Zwischen verschiedenen Datenpaketen 20 findet keine Informationsübertragung statt, d.h., wenn vom Sender überhaupt eine Sendeleistung ausgeht, geht diese in eine unmodulierte Trägerfrequenz.

Die Datenpakete 20 werden jeweils zu zusammenhängenden Blöcken 26 ("Frames") zusammengefasst. In jedem Block 26 werden hierbei in einer Sendezeit 28 alle Datenpakete 20 des jeweiligen Blocks 26 versendet. Nach Abschluss des letzten Datenpakets 20 beginnt eine Ruhezeit 30 bis zum Beginn des nächsten Blocks 26, in welcher keine weiteren Datenpakete versendet werden. Die Ruhezeit 30 dauert dabei länger als der zeitliche Abstand 32 zweier aufeinanderfolgender Datenpakete 20. Die in den Datenpaketen 20 eines Blockes 26 kodierte Information ist hierbei teilweise redundant, um bei einem Übertragungsfehler eines Datenpakets 20 dennoch eine Wiedergabe zu ermöglichen. Dies kann beispielsweise durch einzelne, hierfür vorgesehene Redundanz-Pakete 33 erfolgen. Ein einzelner Block 26 stellt dabei die kleinste im Übertragungs-Protokoll vorgesehene Einheit dar, welche nach einem Dekodieren wiedergegeben werden kann. Die mittlere Datenrate 34 des Senders bezieht sich auf die über mehrere Blöcke 26 gemittelte Menge an real versendeter Daten. Die mittlere Datenmenge 36 als die über mehrere Blöcke 26 gemittelte Menge an übertragener Information ist infolge der Redundanzen geringer als die mittlere Datenrate 34. Abzüglich von Informationen, welche Anweisungen für das Protokoll betreffen, und üblicherweise in einer Präambel eines jeden Datenpakets 20 gespeichert sind, entspricht die mittlere Datenmenge 36 im Idealfall der Sample-Rate bei der Wiedergabe.

Das im digitalen Signal 16 gegebene zeitliche Muster, welches durch die Blöcke 26, die Sendezeiten 28 und die Ruhezeiten 30 in den Blöcken 26, sowie durch die einzelnen Datenpakete 20 gebildet wird, kann in jedem einzelnen Hörhilfegerät 6 als externe Zeitreferenz für die gemeinsame Synchronisierung verwendet werden.

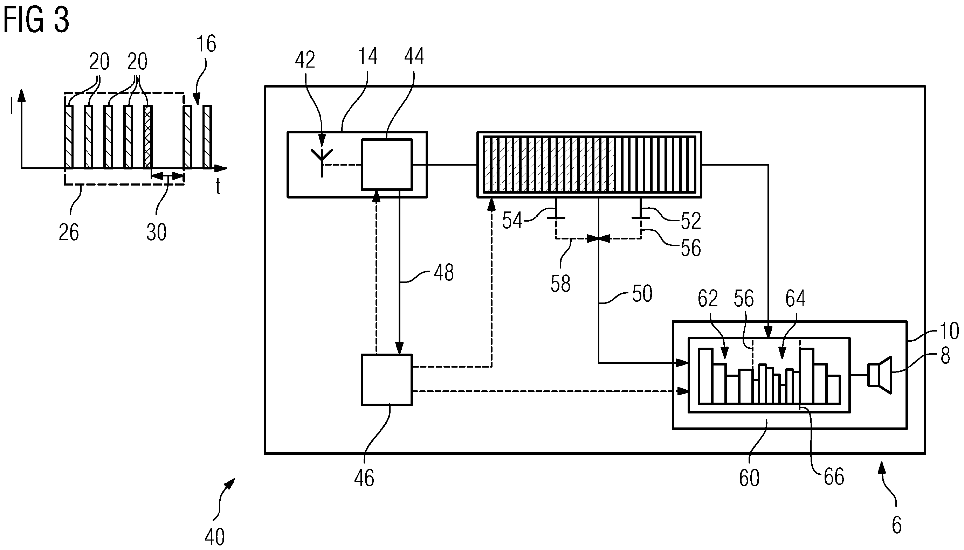

In Fig. 3 ist das Verfahren 40 zur Synchronisierung der Wiedergabe des digitalen Signals 16 anhand der Vorgänge in einem Hörhilfegerät 6 des binauralen Hörgerätes 1 nach Fig. 1 dargestellt. Die Vorgänge im zweiten, nicht näher dargestellten Hörhilfegerät verlaufen analog, die Synchronisierung der Wiedergabe in beiden Hörhilfegeräten erfolgt über eine Synchronisierung mit dem digitalen Signal 16, und somit implizit über eine gemeinsame Synchronisierung mit dem internen Zeitgeber des Senders 18.

Die Signal-Empfangseinheit 14 des Hörhilfegeräts umfasst eine Antenne 42, welche das digitale Signal 16 empfängt, und einen Dekoder 44, welcher die einzelnen empfangenen Datenpakete 20 dekodiert, und die darin enthaltene Information extrahiert. Die aus den Datenpaketen extrahierte Information, welche für die Audio-Wiedergabe vorgesehen ist, also die Information der empfangenen Datenpakete bereinigt um Redundanzen und Präambel-Daten der Datenpakete 20, wird vom Dekoder 44 in einen FIFO-Speicher 45 geschrieben. Der Dekoder 44 ist weiter mit dem internen Zeitgeber 46 des Hörhilfegeräts 6 verbunden, um die zeitliche Abfolge der empfangenen Datenpakete 20 und hieraus den Beginn einzelner Blöcke 26 erkennen zu können. Zu Beginn eines jeden Blockes 26, welcher anhand der vorangehenden Ruhezeit 30 identifiziert wird, generiert der Dekoder 44 in der Signal-Empfangseinheit 14 einen Signalpuls eines Zeit-Referenzsignals 48.

Zu bestimmten, durch das Zeit-Referenzsignal 48 vorgegebenen Zeitpunkten, wobei die Zeitmessung über den internen Zeitgeber 46 erfolgt, wird der Füllstand des FIFO-Speichers 45 der zumindest näherungsweise ermittelt. Dies kann beispielsweise über eine Abschätzung der zum Zeitpunkt der Messung wenigstens teilweise mit Informationen belegten physikalischen Speicherblöcke des FIFO-Speichers 45 erfolgen. Die Information über den Füllstand wird als FIFO-Signal 50 ausgegeben. Für den Füllstand des FIFO-Speichers 45 sind hierbei ein oberer Grenzwert 52 und ein unterer Grenzwert 54 vorgegeben. Wird der obere Grenzwert 52 überschritten, für dessen Vorgabe auch die Genauigkeit der Abschätzung des Füllstandes berücksichtigt werden kann, so wird ein Überschreitungssignal 56 generiert, welches Eingang in das FIFO-Signal 50 findet. Wird entsprechend der untere Grenzwert 54 unterschritten, so wird ein Unterschreitungssignal 58 generiert, welches ebenso in das FIFO-Signal 50 eingeht.

Das FIFO-Signal 50 wird nun in folgender Weise zur Wiedergabe herangezogen: Die Audio-Daten des FIFO-Speichers 45 an die Audio-Wiedergabeeinheit 10 ausgegeben, in welcher sie von einem Codec 60 in einzelne Samples 62 umgewandelt werden, die durch den Lautsprecher 8 wiedergegeben werden. Die Wiedergabegeschwindigkeit der Samples 62, welche mittels des internen Zeitgebers 46 eingestellt wird, richtet sich dabei zunächst nach einer durch das Übertragungs-Protokoll vom Sender 18 vorgegebenen Sample-Rate. Durch das Abspielen der Samples 62 werden dem FIFO-Speicher 45 kontinuierlich Informationen entnommen. Da im Idealfall die Rate, mit welcher neue Audio-Daten aus empfangenen Datenpaketen 20 in den FIFO-Speicher geschrieben werden, der Sample-Rate entspricht, bleibt der Füllstand des FIFO-Speichers 45 in einem Zeitmittel über Blöcke 26 hinweg konstant.

Aufgrund der beschriebenen Abweichungen des internen Zeitgebers 46 kann jedoch die Rate der Audio-Daten, welche durch den Sender 18 über das digitale Signal 16 vorgegeben wird, von der realen Wiedergabegeschwindigkeit, mit welcher die Samples 62 wiedergegeben werden, abweichen. Ist die Wiedergabe beispielsweise zu langsam, so füllt sich der FIFO-Speicher 45, bis der obere Grenzwert 52 überschritten wird und ein Überschreitungssignal 56 ins FIFO-Signal 50 eingeht. Das Überschreitungssignal 56 wird an die Audio-Wiedergabeeinheit 10 weitergeleitet als Trigger-Information, die momentane Wiedergabegeschwindigkeit 64 vorübergehend leicht zu erhöhen. Diese Erhöhung kann beispielsweise bis zum nächsten Signalpuls des Zeit-Referenzsignals 48, oder bis zu einem bzgl. des Zeit-Referenzsignals 48 durch den internen Zeitgeber 46 fest vorgegebenen Zeitpunkt 66 andauern. Bei einer Unterschreitung des unteren Grenzwertes 54 ist die momentane Wiedergabegeschwindigkeit 64 entsprechend zu verringern.

Die Dauer und der Betrag der Erhöhung der momentanen Wiedergabegeschwindigkeit 66 ist bevorzugt so auszuwählen, dass angesichts der üblicherweise erwartbaren Abweichungen für den internen Zeitgeber 46 von einer idealen Zeitgebung bei einer Wiederherstellung der Wiedergabegeschwindigkeit, welche einer Wiedergabe mit der durch das Übertragungs-Protokoll vorgegebenen Sample-Rate entspricht, der Füllstand des FIFO-Speichers 45 wieder zwischen dem oberen Grenzwert 52 und dem unteren Grenzwert 54 liegt. In einem über mehrere Blöcke 26 erhobenen Zeitmittel kann somit der Füllstand des FIFO-Speichers 45 zwischen den beiden Grenzwerten 52, 54 und somit im Wesentlichen konstant gehalten werden, wodurch die Wiedergabe mit der durch den Sender 18 vorgegebenen Datenrate 34 bzgl. eines internen Zeitgebers des Senders 18 synchronisiert wird. Da die beschriebenen Vorgänge für beide Hörhilfegeräte 6 des binauralen Hörgeräts 1 in gleicher Weise erfolgen, wird hierdurch auch die jeweiligen Wiedergaben der Hörhilfegeräte 6 miteinander synchronisiert.

In einer alternativen Ausgestaltung kann das FIFO-Signal 50 auch nur durch das Überschreitungssignal 56 und das Unterschreitungssignal 58 gebildet werden, welche jeweils genau dann generiert werden, wenn der obere Grenzwert 52 bzw. der untere Grenzwert 54 über- bzw. unterschritten wird. D.h., es erfolgt keine Ermittlung des Füllstandes zu bzgl. des Zeit-Referenzsignals 48 fest vorgegebenen Zeitpunkten, sondern das Überschreitungssignal 56 wird instantan ausgegeben, wobei der Zeitpunkt des Überschreitens bzgl. des Zeit-Referenzsignals 48 mittels des internen Zeitgebers 46 für das weitere Vorgehen erfasst wird.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.
- 60: Codec
- 62: Sample
- 64: momentane Wiedergabegeschwindigkeit
- 66: vorgegebener Zeitpunkt

- t: Zeitachse
- l: Datenmenge

## Patentansprüche

1. Verfahren (40) zur Synchronisierung einer Wiedergabe eines von einem Sender (18) an eine Mehrzahl an mobilen Audio-Endgeräten (4) versendeten digitalen Signals (16),
wobei die mobilen Audio-Endgeräte (4) jeweils eine Signal-Empfangseinheit (14), einen mit der Signal-Empfangseinheit (14) verbundenen First-In-First-Out-Speicher (45) und eine mit dem First-In-First-Out-Speicher (45) verbundene Audio-Wiedergabeeinheit (10) aufweisen,
wobei der Sender (18) das digitale Signal (16) als eine Vielzahl an Datenpaketen (20) mit einer im Zeitmittel konstanten Datenrate (34) versendet,
wobei für jedes mobile Audio-Endgerät (4) jeweils in gleicher Weise
- die Signal-Empfangseinheit (14) wenigstens eine Untermenge der Vielzahl an Datenpaketen (20) empfängt,
- die Signal-Empfangseinheit (14) anhand der empfangenen Datenpakete (20) ein Zeit-Referenzsignal (48) generiert,
- vom First-In-First-Out-Speicher (45) ein FIFO-Signal (50) generiert wird, welches Informationen zum Füllstand des First-In-First-Out-Speichers (45) zu bestimmten Zeitpunkten enthält,
- auf Basis des Zeit-Referenzsignals (48) und des FIFO-Signals (50) eine momentane Wiedergabegeschwindigkeit (64) eingestellt wird,
- die Audio-Wiedergabeeinheit (10) dem digitalen Signal (16) entsprechende Samples (62) mit der momentanen Wiedergabegeschwindigkeit (64) wiedergibt, und
- hierdurch der Füllstand des First-In-First-Out-Speichers (45) im Zeitmittel konstant gehalten wird.

2. Verfahren (40) nach Anspruch 1,
wobei der Sender (18) jeweils Gruppen von Datenpaketen (20) zu zeitlichen Blöcken (26) zusammenfasst,
wobei jeder Block (26) ein Zeitmuster mit einer Sendezeit (28) und einer Ruhezeit (30) aufweist,
wobei alle Datenpakete (20) eines Blocks (26) während der Sendezeit (28) gesendet werden, und
wobei die Ruhezeit (30) jedes Blocks (26) länger ist als der zeitliche Abstand (32) je zweier Datenpakete (20) zueinander.

3. Verfahren (40) nach Anspruch 2,
wobei jede Signal-Empfangseinheit (14) das Zeit-Referenzsignal (48) aus einer Periodizität der empfangenen Blöcke (26) von Datenpaketen (20) generiert.

4. Verfahren (40) nach einem der vorhergehenden Ansprüche,
wobei für jedes mobile Audio-Endgerät (4) jeweils zu anhand des Zeit-Referenzsignals (48) bestimmten Zeitpunkten der Füllstand des First-In-First-Out-Speichers (45) zumindest näherungsweise ermittelt wird, und hieraus das FIFO-Signal (50) generiert wird.

5. Verfahren (40) nach Anspruch 4,
wobei für jedes mobile Audio-Endgerät (4) jeweils
- ein oberer Grenzwert (52) und ein unterer Grenzwert (54) für den Füllstand des First-In-First-Out-Speichers (45) vorgegeben werden,
- wobei die momentane Wiedergabegeschwindigkeit (64) für eine anhand des Zeit-Referenzsignals (48) bestimmten Dauer erhöht wird, wenn der obere Grenzwert (52) überschritten wird, und
- wobei die momentane Wiedergabegeschwindigkeit (64) für eine anhand des Zeit-Referenzsignals (48) bestimmten Dauer verringert wird, wenn der untere Grenzwert (54) unterschritten wird.

6. Verfahren (40) nach einem der Ansprüche 1 bis 3,
wobei für jedes mobile Audio-Endgerät (4) jeweils
- ein oberer Grenzwert (52) und ein unterer Grenzwert (54) für den Füllstand des First-In-First-Out-Speichers (45) vorgegeben wird,
- wobei ein Überschreitungssignal (56) generiert wird, wenn der obere Grenzwert (52) überschritten wird,
- wobei ein Unterschreitungssignal (58) generiert wird, wenn der untere Grenzwert (54) unterschritten wird, und
- wobei aus dem Überschreitungssignal (56) und dem Unterschreitungssignal (58) das FIFO-Signal (50) generiert wird.

7. Verfahren (40) nach Anspruch 6,
wobei für jedes mobile Audio-Endgerät (4) jeweils
- die momentane Wiedergabegeschwindigkeit (64) für eine anhand des Zeit-Referenzsignals (48) bestimmten Dauer erhöht wird, wenn das FIFO-Signal (50) ein Überschreitungssignal (56) enthält, und
- die momentane Wiedergabegeschwindigkeit (64) für eine anhand des Zeit-Referenzsignals (48) bestimmten Dauer verringert wird, wenn das FIFO-Signal (50) ein Unterschreitungssignal (58) enthält.

8. Verfahren (40) nach einem der vorhergehenden Ansprüche,
wobei für jedes mobile Audio-Endgerät (4) jeweils die momentane Wiedergabegeschwindigkeit (64) in Abhängigkeit des FIFO-Signals (50) auf einen anhand des Zeit-Referenzsignals (48) und/oder des Füllstandes des First-In-First-Out-Speichers (45) bestimmten Betrag eingestellt wird.

9. Hörsystem (2) mit einer Mehrzahl an mobilen Audio-Endgeräten (4), welche jeweils eine Signal-Empfangseinheit (14), einen First-In-First-Out-Speicher (45) und eine Audio-Wiedergabeeinheit (10) umfassen, wobei die mobilen Audio-Endgeräte (4) dazu eingerichtet sind, das Verfahren (40) nach einem der vorhergehenden Ansprüche durchzuführen.

10. Hörsystem (2) nach Anspruch 9, welches als binaurales Hörgerät (1) mit zwei Hörhilfegeräten (6) ausgebildet ist.

## Claims

1. Method (40) for synchronizing a reproduction of a digital signal (16) sent by a transmitter (18) to a plurality of mobile audio terminals (4),
wherein the mobile audio terminals (4) each comprise a signal receiver (14), a First-In-First-Out memory (45) connected to the signal receiver (14) and an audio reproduction unit (10) connected to the First-In-First-Out memory (45),
wherein the transmitter (18) sends the digital signal (16) as a multiplicity of data packets (20) at a data rate (34) that is constant as an average over time, wherein for each mobile audio terminal (4), in the same manner in each case,
- the signal receiver (14) receives at least a subset of the multiplicity of data packets (20),
- the signal receiver (14) generates from the received data packets (20) a time reference signal (48),
- a FIFO signal (50), which contains information on the occupancy level of the First-In-First-Out memory (45) at specific time points, is generated from the First-In-First-Out memory (45),
- an instantaneous reproduction speed (64) is set on the basis of the time reference signal (48) and the FIFO signal (50),
- the audio reproduction unit (10) reproduces at the instantaneous reproduction speed (64) samples (62) corresponding to the digital signal (16), and
- the occupancy level of the First-In-First-Out memory (45) is thereby kept constant as an average over time.

2. Method (40) according to Claim 1,
wherein the transmitter (18) combines respective groups of data packets (20) into time frames (26), wherein each frame (26) exhibits a time pattern containing a transmission time (28) and a quiet time (30),
wherein all the data packets (20) in a frame (26) are transmitted during the transmission time (28), and wherein the quiet time (30) in each frame (26) is longer than the time gap (32) between any two data packets (20).

3. Method (40) according to Claim 2,
wherein each signal receiver (14) generates the time reference signal (48) from a periodicity of the received frames (26) of data packets (20).

4. Method (40) according to any of the preceding claims,
wherein for each mobile audio terminal (4), the occupancy level of the FIFO memory (45) is determined at least approximately at each of the time points defined on the basis of the time reference signal (48), and the FIFO signal (50) is generated therefrom.

5. Method (40) according to Claim 4,
wherein for each mobile audio terminal (4),
- an upper limit (52) and a lower limit (54) are defined for the occupancy level of the FIFO memory (45),
- wherein if the occupancy level exceeds the upper limit (52), the instantaneous reproduction speed (64) is increased for a period defined on the basis of the time reference signal (48), and
- wherein if the occupancy level drops below the lower limit (54), the instantaneous reproduction speed (64) is decreased for a period defined on the basis of the time reference signal (48).

6. Method (40) according to any of Claims 1 to 3, wherein for each mobile audio terminal (4),
- an upper limit (52) and a lower limit (54) are defined for the occupancy level of the FIFO memory (45),
- if the occupancy level exceeds the upper limit (52), an overshoot signal (56) is generated,
- wherein if the occupancy level drops below the lower limit (54) an undershoot signal (58) is generated, and
- wherein the FIFO signal (50) is generated from the overshoot signal (56) and the undershoot signal (58) .

7. Method (40) according to Claim 6,
wherein for each mobile audio terminal (4),
- if the FIFO signal (50) contains an overshoot signal (56), the instantaneous reproduction speed (64) is increased for a period defined on the basis of the time reference signal (48), and
- if the FIFO signal (50) contains an undershoot signal (58), the instantaneous reproduction speed (64) is decreased for a period defined on the basis of the time reference signal (48).

8. Method (40) according to any of the preceding claims,
wherein for each mobile audio terminal (4), the instantaneous reproduction speed (64) is set according to the FIFO signal (50) to a level defined on the basis of the time reference signal (48) and/or the occupancy level of the FIFO memory (45).

9. Hearing system (2) having a plurality of mobile audio terminals (4), which each comprise a signal receiver (14), a First-In-First-Out memory (45) and an audio reproduction unit (10), wherein the mobile audio terminals (4) are designed to implement the method (40) according to any of the preceding claims.

10. Hearing system (2) according to Claim 9, which is in the form of a binaural hearing-aid apparatus (1) comprising two hearing-aid devices (6).

## Revendications

1. Procédé (40) de synchronisation de la restitution d'un signal numérique (16) envoyé par un émetteur (18) à une pluralité de terminaux audio (4) mobiles,
les terminaux audio (4) mobiles comportant chacun un ensemble récepteur de signaux (14), une mémoire premier entré, premier sorti (45) connectée avec l'ensemble récepteur de signaux (14) et un ensemble de restitution audio (10) connecté avec la mémoire premier entré, premier sorti (45),
l'émetteur (18) envoyant le signal numérique (16) sous la forme d'une pluralité de paquets de données (20) avec un débit de données (34) constant dans la moyenne de temps,
sachant que pour chaque terminal audio (4) mobile, respectivement de la même manière
- l'ensemble récepteur de signaux (14) réceptionne au moins un sous-ensemble de la pluralité de paquets de données (20),
- à l'aide des paquets de données (20) réceptionnés, l'ensemble récepteur de signaux (14) génère un signal temporel de référence (48),
- par la mémoire premier entré, premier sorti (45) est généré un signal FIFO (50), lequel contient des informations sur le taux d'occupation de la mémoire premier entré, premier sorti (45) à des moments déterminés,
- sur la base du signal de référence dans le temps (48) et du signal FIFO (50), une vitesse de restitution (64) momentanée est réglée,
- l'ensemble de restitution audio (10) reproduit des échantillons (62) correspondant au signal numérique (16), à la vitesse de restitution (64) momentanée, et
- de ce fait, le taux d'occupation de la mémoire premier entré, premier sorti (45) est maintenu constant dans la moyenne de temps.

2. Procédé (40) selon la revendication 1,
l'émetteur (18) réunissant chaque fois des groupes de paquets de données (20) en des blocs temporels (26),
chaque bloc (26) comportant un schéma temporel avec un temps d'émission (28) et un temps de repos (30),
tous les paquets de données (20) d'un bloc (26) étant envoyés pendant le temps d'émission (28) et le temps de repos (30) de chaque bloc (26) étant plus long que l'écart temporel (32) entre chaque fois deux paquets de données (20).

3. Procédé (40) selon la revendication 2,
chaque ensemble récepteur de signaux (14) générant le signal de référence dans le temps (48) à partir d'une périodicité des blocs (26) de paquets de données (20) réceptionnés.

4. Procédé (40) selon l'une quelconque des revendications précédentes,
pour chaque terminal audio (4) mobile, chaque fois à des moments déterminés à l'aide du signal temporel de référence (48), le taux d'occupation de la mémoire premier entré, premier sorti (45) étant déterminé au moins approximativement, et à partir de celui-ci, le signal FIFO (50) étant généré.

5. Procédé (40) selon la revendication 4,
pour chaque terminal audio (4) mobile, chaque fois
- une valeur limite supérieure (52) et une valeur limite inférieure (54) étant prédéfinies pour le taux d'occupation de la mémoire premier entré, premier sorti (45),
- la vitesse de restitution (64) momentanée étant augmentée pour une durée déterminée à l'aide du signal de référence dans le temps (48) lorsque la valeur limite supérieure (52) est dépassée et
- la vitesse de restitution (64) momentanée étant réduite pour une durée déterminée à l'aide du signal de référence dans le temps (48) si la valeur limite inférieure (54) n'est pas atteinte.

6. Procédé (40) selon l'une quelconque des revendications 1 à 3,
pour chaque terminal audio (4) mobile, chaque fois
- une valeur limite supérieure (52) et une valeur limite inférieure (54) étant prédéfinies pour le taux d'occupation de la mémoire premier entré, premier sorti (45),
- un signal de dépassement (56) étant généré lorsque la valeur limite supérieure (52) est dépassée,
- un signal de non-atteinte (58) étant généré lorsque la valeur limite inférieure (54) n'est pas atteinte et
- le signal FIFO (50) étant généré à partir du signal de dépassement (56) et du signal de non-atteinte (58).

7. Procédé (40) selon la revendication 6,
pour chaque terminal audio (4) mobile, chaque fois
- la vitesse de restitution (64) momentanée étant augmentée pour une durée déterminée à l'aide du signal temporel de référence (48) si le signal FIFO (50) contient un signal de dépassement (56) et
- la vitesse de restitution (64) étant réduite pour une durée déterminée à l'aide du signal temporel de référence (48) si le signal FIFO (50) contient un signal de non-atteinte (58).

8. Procédé (40) selon l'une quelconque des revendications précédentes,
pour chaque terminal audio (4) mobile, chaque fois, la vitesse de restitution (64) momentanée étant réglée en fonction du signal FIFO (50) à une valeur déterminée à l'aide du signal temporel de référence (48) et/ou du taux d'occupation de la mémoire premier entré, premier sorti (45).

9. Système auditif (2) comportant une pluralité de terminaux audio (4) mobiles, lesquels comprennent chacun un ensemble récepteur de signaux (14), une mémoire premier entré, premier sorti (45) et un ensemble de restitution audio (10), les terminaux audio (4) mobiles étant aménagés pour réaliser le procédé (40) selon l'une quelconque des revendications précédentes.

10. Système auditif (2) selon la revendication 9, lequel est conçu sous la forme d'un dispositif auditif (1) binaural, doté de deux aides auditives (6) .
